# EUROPEAN PATENT APPLICATION

(11) **EP 4 787 393 A1**
(43) Date of publication of application: **05.08.2026**
(21) Application number: 24872048.4
(22) Date of filing: 19.09.2024
(51) Int. Cl.: H01B 1/06, C01B 33/10, C01F 7/54, C01G 17/00, C01G 23/02, H01B 13/00, H01M 4/62, H01M 10/052, H01M 10/054, H01M 10/0562

(54) **SOLID ELECTROLYTE, SOLID ELECTROLYTE PRODUCTION METHOD, AND BATTERY**

(30) Priority: 29.09.2023 WO PCT/JP2023/035748; 28.05.2024 JP 2024086423
(71) Applicant: NGK Insulators, Ltd., Nagoya-shi, Aichi 467-8530 (JP); Nagoya Institute Of Technology, Nagoya-shi, Aichi 466-8555 (JP)
(72) Inventor: YAGI, En, Nagoya-shi, Aichi 467-8530 (JP); TAKAHASHI, Haruto, Nagoya-shi, Aichi 467-8530 (JP); YOSHIDA, Toshihiro, Nagoya-shi, Aichi 467-8530 (JP); MIYAZAKI, Reona, Nagoya-Shi, Aichi 466-8555 (JP)
(74) Representative: Mewburn Ellis LLP
(86) International application number: PCT/JP2024/033528
(87) International publication number: WO 2025/070257

(57) **Abstract**

A solid electrolyte contains M1, M2, and X, where M1 is an element(s) serving as a univalent cation and includes at least one element selected from a group consisting of Li, Na, and K, M2 is at least one element serving as a trivalent cation, and X is at least one element selected from a group consisting of F, Cl, Br, and I. All interaxial angles α, β, and γ of a unit cell in a crystal structure are 90°. Accordingly, it is possible to provide the solid electrolyte with high ion conductivity.

## Description

### TECHNICAL FIELD

The present invention relates to a solid electrolyte and a battery.

### CROSS-REFERENCE TO RELATED APPLICATIONS

This application claims priority benefit of International Patent Application No. PCT/JP2023/35748 filed on September 29, 2023 and Japanese Patent Application No. JP2024-86423 filed in the Japan Patent Office on May 28, 2024, the entire disclosures of which are incorporated herein by reference.

### BACKGROUND ART

In recent years, with the development of portable equipment such as personal computers and mobile phones, demand for batteries serving as power sources of such portable equipment is increasing considerably. The batteries used for such purposes conventionally use, as media for transporting ions, organic electrolyte solutions that contain electrolytes dissolving in inflammable organic solvents. The batteries containing the organic electrolyte solutions may cause safety concerns. In view of this, all-solid-state batteries that use solid electrolytes instead of organic electrolyte solutions are under development in order to ensure intrinsic safety. Since the electrolytes are incombustible materials, all-solid-state batteries enable realizing intrinsically safe lithium-ion batteries.

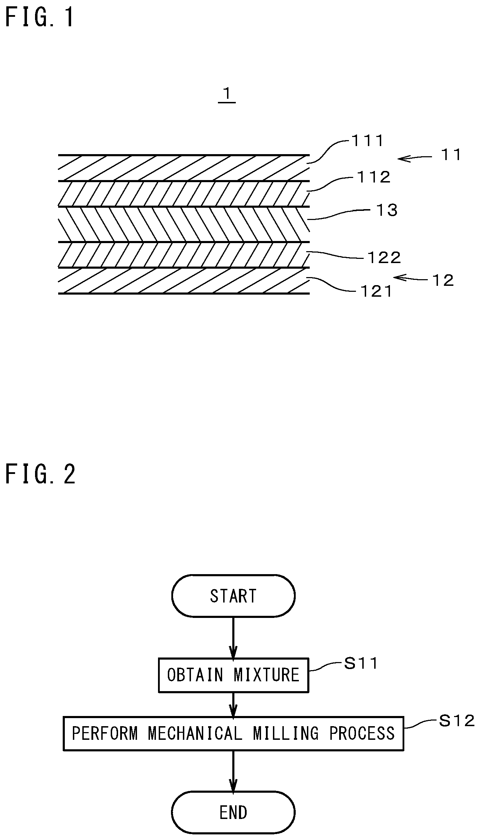

For example, "All-Solid-State Lithium-Ion Batteries Using the Li3AlF6-Based Composite as the Solid Electrolyte", by Reona Miyazaki and other six members, ACS Applied Energy Materials, Volume 5, Issue 12, pp. 15365-15372 (Document 1) discloses a solid electrolyte expressed as Li₃AlF₆-Li₂SO₄. International Publication No. 2023/13390 (Document 2) discloses a solid electrolyte material that contains crystal phases including Li, Zr, Al, and F. It is conceivable from Fig. 2 in Document 2 that the above solid electrolyte material has a monoclinic crystal structure.

The solid electrolytes according to Documents 1 and 2 fail to provide sufficient ion conductivity. Thus, there is demand for new solid electrolytes with high ion conductivity.

### SUMMARY OF THE INVENTION

The present invention is intended for a solid electrolyte, and it is an object of the present invention to provide a solid electrolyte with high ion conductivity.

Aspect 1 of the invention is a solid electrolyte that contains M1, M2, and X. M1 is an element(s) serving as a univalent cation and includes at least one element selected from a group consisting of Li, Na, and K. M2 is at least one element serving as a trivalent cation. X is at least one element selected from a group consisting of F, Cl, Br, and I. All interaxial angles α, β, and γ of a unit cell in a crystal structure are 90°.

According to the present invention, it is possible to provide the solid electrolyte with high ion conductivity.

Aspect 2 of the invention is the solid electrolyte according to Aspect 1, in which an X-ray diffraction pattern obtained by X-ray diffraction measurement using a CuKα ray has a peak in each of ranges of a diffraction angle 20 from 19° to 23°, from 40° to 44°, from 52° to 56°, and from 64° to 68°.

Aspect 3 of the invention is the solid electrolyte according to Aspect 1 or 2, in which in an X-ray diffraction pattern obtained by X-ray diffraction measurement using a CuKα ray, I1/(I1 + I2) is greater than 0.30, where I1 is an intensity of a highest peak in a range of a diffraction angle 20 from 40° to 44°, and I2 is an intensity of a highest peak in a range of the diffraction angle 2θ from 19° to 23°.

Aspect 4 of the invention is the solid electrolyte according to any one of Aspects 1 to 3 that further includes M3 that is at least one element serving as a quadrivalent cation.

Aspect 5 of the invention is the solid electrolyte according to Aspect 4 that is expressed by a composition formula of M1ₐM2_{b}M3_{c}X₆, where 2 < a < 3, 0 < b < 1, and 0 < c < 1 are satisfied.

Aspect 6 of the invention is the solid electrolyte according to Aspect 4 or 5, in which M3 includes Ge or Si.

Aspect 7 of the invention is the solid electrolyte according to any one of Aspects 1 to 6, in which X includes F.

Aspect 8 of the invention is the solid electrolyte according to any one of Aspects 1 to 7, in which M2 includes Al.

Aspect 9 of the invention is the solid electrolyte according to any one of Aspects 1 to 8, in which M1 includes Rb or Cs.

The present invention is also intended for a method of producing a solid electrolyte, and for a battery.

Aspect 10 of the invention is a method of producing the solid electrolyte according to any one of Aspects 1 to 9. The method includes a) obtaining a mixture of M1₃M2X₆ and M1₂M3X₆ or a mixture of M1X, M2X₃, and M1₂M3X₆, where M1 is an element(s) serving as a univalent cation and includes at least one element selected from a group consisting of Li, Na, and K, M2 is at least one element serving as a trivalent cation, X is at least one element selected from a group consisting of F, Cl, Br, and I, and M3 is at least one element serving as a quadrivalent cation, and b) subjecting the mixture to a mechanical milling process.

Aspect 11 of the invention is a battery that includes a positive electrode, a negative electrode, and an electrolyte layer provided between the positive electrode and the negative electrode. The solid electrolyte according to any one of Aspects 1 to 9 is contained in at least one of the positive electrode, the negative electrode, or the electrolyte layer.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal sectional view showing an all-solid-state battery.
Fig. 2 is a flowchart showing a procedure for producing a solid electrolyte.
Fig. 3 is a diagram showing an X-ray diffraction pattern of the solid electrolyte.
Fig. 4 is a diagram showing an X-ray diffraction pattern of a solid electrolyte according to a comparative example.
Fig. 5 is a diagram showing an X-ray diffraction pattern of a solid electrolyte according to a comparative example.
Fig. 6 is a diagram showing Arrhenius plots of ion conductivity for Li₃AlF₆ in which Si is solid-solved.

### DESCRIPTION OF EMBODIMENTS

Fig. 1 is a longitudinal sectional view showing an all-solid-state battery 1. The all-solid-state battery 1 according to the present embodiment is a rechargeable secondary battery and is any of a lithium (Li)-ion battery, a sodium (Na)-ion battery, and a potassium (K)-ion battery. The all-solid-state battery 1 includes a positive electrode 11, an electrolyte layer 13, and a negative electrode 12 in order from above in Fig. 1. That is, the electrolyte layer 13 is provided between the positive electrode 11 and the negative electrode 12. The electrolyte layer 13 is a solid electrolyte layer and serves also as a separator layer.

The positive electrode 11 includes a current collector 111 and a positive electrode layer 112. The positive electrode layer 112 includes a positive active material and a solid electrolyte, which will be described later. The positive electrode layer 112 may further include a conductive agent (e.g., carbon black). One example of the positive electrode layer 112 is obtained by integrating those substances by the application of pressure or other means. The negative electrode 12 includes a current collector 121 and a negative electrode layer 122. The negative electrode layer 122 includes a negative active material and a solid electrolyte, which will be described later. The negative electrode layer 122 may further include a conductive agent (e.g., carbon black). One example of the negative electrode layer 122 is obtained by integrating those substances by the application of pressure or other means.

In the case where the all-solid-state battery 1 is a Li-ion battery, the positive active material of the positive electrode layer 112 preferably includes a lithium complex oxide. A preferable positive active material is a lithium complex oxide having a layered rock-salt structure and may, for example, be NCM (Li(Ni, Co, Mn)O₂). The positive active material may also be any other lithium complex oxide and may, for example, be NCA (Li(Ni, Co, Al)O₂) or LCO (LiCoO₂) having a layered rock-salt structure, LNMO (LiNi_{0.5}Mn_{1.5}O₄) having a spinel structure, or LFP (LiFePO₄) having an olivine structure. The negative active material of the negative electrode layer 122 is, for example, a compound such as LTO (Li₄Ti₅O₁₂), NTO (Nb₂TiO₇), TiO₂ (titanium oxide), graphite, SiO (silicon monoxide), Si, or Sn.

In the case where the all-solid-state battery 1 is a Na-ion battery, one example of the positive active material of the positive electrode layer 112 is Na(Fe, Mn)O₂. Other examples of the positive active material include layered compounds such as NaCoO₂, NaNiO₂, NaMnO₂, Na(Ni, Co, Mn)O₂, NaFeO₂, and Na(Ni, Mn, Fe, Ti)O₂, spinel-type compounds such as NaMn₂O₄, polyanion-type compounds such as Na₃V₂(PO₄)₃, Na₂Fe₂(SO₄)₃, Na₂Mn₂(SO₄)₃, NaFePO₄, NaMnPO₄, Na₄Fe₇(PO₄)₆, and Na₃V(PO₃)₃N, and pyrophosphate compounds such as Na₂MnP₂O₇ and Na₂FeP₂O₇. One example of the negative active material of the negative electrode layer 122 is hard carbon. Other examples of the negative active material include metal such as Na, In, Sn, and Sb, alloys of the metal and Na, graphite, SiO, TiO₂, Fe₂O₃, Na_{4/3}Ti_{5/3}O₄, Na₂Ti₆O₁₃, Na_{0.66}[Li_{0.22}Ti_{0.78}]O₂, Na₃V₂(PO₄)₃, SnO, and Li₄Ti₅O₁₂. In the case where the all-solid-state battery 1 is a K-ion battery, known materials are used as the positive active material and the negative active material.

The configurations and materials of the positive electrode 11 and the negative electrode 12 in the all-solid-state battery 1 are not limited to those described above, and may be any of other various configurations and materials.

The electrolyte layer 13 is composed of or contains a solid electrolyte according to one embodiment of the present invention (hereinafter, also referred to as the "present solid electrolyte"). The solid electrolyte is an ion-conductive material. The solid electrolyte contains an element M1, an element M2, and an element X. The solid electrolyte may be composed of only M1, M2, and X. M1 is at least one metallic element serving as a univalent cation and includes at least one element selected from the group consisting of Li, Na, and K. Preferably, M1 is at least one element selected from the group consisting of Li, Na, and K. M1 may further include rubidium (Rb) or cesium (Cs). M2 is a metallic element(s) and includes at least one element serving as a trivalent cation. Examples of M2 include Group 13 elements of the periodic table such as aluminum (Al), gallium (Ga), and indium (In), Group 3 elements such as scandium (Sc), rare-earth elements such as iron (Fe), yttrium (Y), and holmium (Ho), and transition-metal elements such as manganese (Mn). X is a halogen element(s) and includes at least one element selected from the group consisting of fluorine (F), chlorine (Cl), bromine (Br), and iodine (I). As will be described later, the solid electrolyte has an orthorhombic, cubic, or tetragonal crystal structure, in which all interaxial angles α, β, and γ of a unit cell are 90°. This realizes high ion conductivity.

M1 preferably includes Li and may include only Li. M2 preferably includes Al and may include only Al. X preferably includes F and may include only F. This solid electrolyte can more reliably exhibit improved ion conductivity. Typically, the amount of substance of M1 is greater than the amount of substance of M2, and the amount of substance of X is greater than the amount of substance of M1.

More preferably, the present solid electrolyte further contains an element M3. M3 is a metallic or semi-metallic element(s) and is at least one element serving as a quadrivalent cation. As will be described later, the solid electrolyte containing the element M3 can easily realize a crystal structure in which all the interaxial angles α, β, and γ of the unit cell are 90°. M3 preferably includes germanium (Ge) or silicon (Si) and may include both Ge and Si. M3 may include only either Ge or Si, or may include only both of Ge and Si. Of course, M3 may be an element other than Ge and Si.

Preferably, the solid electrolyte is expressed by a composition formula of:

M1ₐM2_{b}M3_{c}X₆ ... (1)

In one example of the production of the solid electrolyte, for example, M1₃M2X₆ and M1₂M3X₆ are mixed to obtain the present solid electrolyte. In the case where M1₃M2X₆ and M1₂M3X₆ are mixed in the molar ratio of (1-x):x, where 0 < x < 1, the present solid electrolyte is expressed by a composition formula of M1₃₋ₓM2₁₋ₓM3ₓX₆. In other words, the composition formula (1) satisfies 2 < a < 3, 0 < b < 1, and 0 < c < 1. This solid electrolyte can more reliably exhibit improved ion conductivity. In actuality, a + 3b + 4c = 6 is also almost satisfied in view of valence balance. With consideration given to factors such as measurement errors, if the value of a + 3b + 4c falls within the range from 5.4 to 6.6 (preferably from 5.7 to 6.3), it can be considered that a + 3b + 4c = 6 is satisfied. If each value in the molar ratio of M1, M2, M3, and X obtained by analysis also falls within the range of plus or minus 10% (preferably, plus or minus 5%) of the value in the above composition formula (1), it can be considered that the above composition formula (1) is satisfied.

As will be described later, it is preferable that 0.03 ≤ x ≤ 0.80 is satisfied, and in this case, 2.20 ≤ a ≤ 2.97, 0.20 ≤ b ≤ 0.97, and 0.03 ≤ c ≤ 0.80 are satisfied. It is more preferable that 0.05 ≤ x ≤ 0.65 is satisfied, and in this case, 2.35 ≤ a ≤ 2.95, 0.35 ≤ b ≤ 0.95, and 0.05 ≤ c ≤ 0.65 are satisfied.

In the case where it is verified whether an unknown solid electrolyte is expressed by the composition formula (1), for example, Li, Na, Rb, K, Al, Ge, and Si can be quantitated by methods such as ICP emission spectroscopy. F, Cl, Br, and I can be quantitated by, for example, ion chromatography. In the case where the present solid electrolyte contains elements other than the elements described above, a measurement method capable of quantitating those elements is selected as appropriate. There are cases in which raw materials for the solid electrolyte may unavoidably include oxygen (O) as impurities, and in this case, the solid electrolyte also contains O. Here, 5% or less by mass of O contained in the present solid electrolyte is considered as an impurity and shall not be taken into account in the verification of whether the present solid electrolyte satisfies the above composition formula (1).

As will be described later, in one preferable example of the present solid electrolyte, an X-ray diffraction pattern obtained by X-ray diffraction measurement using CuKα rays has a peak in each of ranges of a diffraction angle 20 from 19° to 23°, from 40° to 44°, from 52° to 56°, and from 64° to 68°. Moreover, I1/(I1 + I2) is greater than 0.30, where I1 is the intensity of a highest peak in the range of the diffraction angle 20 from 40° to 44°, and I2 is the intensity of a highest peak in the range of the diffraction angle 20 from 19° to 23°. This solid electrolyte has a higher ratio of orthorhombic crystals and more reliably exhibits high ion conductivity. Note that the ranges of the diffraction angle 20 in which the X-ray diffraction pattern has peaks, and the intensity ratio of the peaks vary depending on the crystal structure or components of the solid electrolyte.

Fig. 2 is a flowchart showing a procedure for producing the present solid electrolyte. The following description is given of processing for mixing M1₃M2X₆ and M1₂M3X₆ to produce the solid electrolyte expressed by the above composition formula (1). First, M1₃M2X₆ powder is prepared. In the preparation of the M1₃M2X₆ powder, for example, M1X powder and M2X₃ powder are weighed and mixed in the molar ratio of 3:1. Then, a resultant mixture is subjected to heat treatment (e.g., at 900°C) and thereafter pulverized into M1₃M2X₆ powder. The M1₃M2X₆ powder may also be generated by other methods. On example of M1₃M2X₆ is Li₃AlF₆, where M1X is LiF (lithium fluoride) and M2X₃ is AlF₃ (aluminum fluoride).

Moreover, M1₂M3X₆ powder is prepared. For example, M1₂M3X₆ is Li₂GeF₆ or Li₂SiF₆. The Li₂GeF₆ or Li₂SiF₆ powder may be commercially available powder, or may be generated by known methods. Then, the M1₃M2X₆ powder and the M1₂M3X₆ powder are mixed to obtain a mixture (step S11). In this mixture, the ratio of the amount of substance of M1₂M3X₆ to a total of the amount of substance of M1₃M2X₆ and the amount of substance of M1₂M3X₆ is higher than 0% and lower than 100%. This ratio is preferably higher than or equal to 3% and lower than or equal to 80% and more preferably higher than or equal to 5% and lower than or equal to 65%. M1₃M2X₆ may also be, for example, Li₃GaF₆, Li₃InF₆, Li₃ScF₆, or Li₃YF₆ as well as Li₃AlF₆. M1₂M3X₆ may also be, for example, Li₂SnF₆ as well as Li₂GeF₆ and Li₂SiF₆. As described previously, M1 may be Na or K (e.g., Na₃AlF₆, Na₂GeF₆, or Na₂SiF₆), and X may also be Cl, Br, or I. As another alternative, multiple types of M1₃M2X₆ and/or M1₂M3X₆ where one or more, or all, of M1, M2, M3, and X differ may be used. In this case, some of M1 may be Rb or Cs, for example. As will be described later, the same also applies to the case where M1X and M2X₃ are mixed directly with M1₂M3X₆.

Then, the mixture is subjected to a mechanical milling process (also called mechano-milling) (step S12). In one example of the mechanical milling process, a planetary ball mill is used. The planetary ball mill is capable of generating very high impact energy because a stage with a pot placed thereon revolves while the pot rotates on its axis. The mechanical milling process may be conducted using other types of pulverizers. Through the above mechanical milling process, powder of the present solid electrolyte is obtained for use in the positive electrode layer 112, the negative electrode layer 122, or the electrolyte layer 13. In the present processing example, the mechanical milling process is conducted at ordinary temperatures, but conditions for the mechanical milling process such as temperature may be changed as appropriate.

In step S11 shown in Fig. 2, M1X and M2X₃ may be mixed directly with M1₂M3X₆ without generating M1₃M2X₆. In this case as well, a solid electrolyte with high lithium-ion conductivity can be produced by subjecting the mixture to the mechanical milling process in step S12. M1X may also be, for example, NaF or KF as well as LiF. M2X₃ may also be, for example, GaF₃, InF₃, ScF₃, or YF₃ as well as AlF₃. The present solid electrolyte may be produced by other processes such as firing, instead of the mechanical milling process.

Next, experiments of the solid electrolyte are described. The following experiments were conducted in a dry room or in a glove box with a dew point of less than or equal to -40°C. Table 1 shows the mixture ratio of raw materials, the composition formula of the solid electrolyte, and various measurement results according to Experiments 1 to 10. Experiments 2 to 8 and 10 are examples according to the present invention, and Experiments 1 and 9 are comparative examples.

**Table 1**

| Experiment No. | Raw Material 1 | | Raw Material 2 | | Raw Material 3 | | Composition Formula | Conductivity 1 (ambient temperature) | Conductivity 2 (ambient temperature) | Crystal Phase of LAF(NAF) | XRD Peak Positions | | | | I1/ (I1 + 12) |
|---|---|---|---|---|---|---|---|---|---|---|---|---|---|---|---|
| | - | Molar Ratio | - | Molar Ratio | - | Molar Ratio | - | S/cm | S/cm | - | *2 θ* /deg. | | | | - |
| 1 | Li₃AlF₆ | 1 | None | 0 | None | 0 | Li₃AlF₆ | 5.0E-08 | --- | Monoclinic | 21.24 | 41.86 | 58.08 | 65.24 | 0.25 |
| 2 | Li₃AlF₆ | 9 | Li₂GeF₆ | 1 | None | 0 | Li_{2.9}Al_{0.9}Ge_{0.1} F₆ | 3.7E-06 | --- | Orthorhombic | 21.19 | 41.52 | 53.88 | 66.33 | 0.40 |
| 3 | Li₃AlF₆ | 8 | Li₂GeF₆ | 2 | None | 0 | Li_{2.8}Al_{0.8}Ge_{0.2}F₆ | 1.4E-05 | 3.3E-05 | Orthorhombic | 20.96 | 41.61 | 53.97 | 66.53 | 0.44 |
| 4 | Li₃AlF₆ | 7 | Li₂GeF₆ | 3 | None | 0 | Li_{2.7}Al_{0.7}Ge_{0.3}F₆ | 8.9E-06 | --- | Orthorhombic | 20.94 | 41.59 | 53.72 | 66.27 | 0.44 |
| 5 | Li₃AlF₆ | 5 | Li₂GeF₆ | 5 | None | 0 | Li_{2.5}Al_{0.5}Ge_{0.5}F₆ | 1.9E-06 | --- | Orthorhombic | 20.92 | 41.63 | 54.07 | 66.10 | 0.33 |
| 6 | Li₃AlF₆ | 9 | Li₂SiF₆ | 1 | None | 0 | Li_{2.9}Al_{0.9}Si_{0.1}F₆ | 1.4E-06 | --- | Orthorhombic | 21.27 | 41.93 | 53.87 | 66.65 | 0.32 |
| 7 | Li₃AlF₆ | 8 | Li₂SiF₆ | 2 | None | 0 | Li_{2.8}Al_{0.8}Si_{0.2}F₆ | 1.5E-05 | 3.1E-05 | Orthorhombic | 21.10 | 41.67 | 53.87 | 66.63 | 0.50 |
| 8 | Li₃AlF₆ | 7 | Li₂SiF₆ | 3 | None | 0 | Li_{2.7}Al_{0.7}Si_{0.3}F₆ | 4.3E-06 | --- | Orthorhombic | 21.15 | 41.83 | 53.99 | 66.79 | 0.47 |
| 9 | Li₃AlF₆ | 8 | Li₂TiF₆ | 2 | None | 0 | Li_{2.8}Al_{0.8}Ti_{0.2}F₆ | 7.1E-07 | 9.8E-07 | Monoclinic | 21.32 | 42.02 | 53.93 | 66.62 | 0.25 |
| 10 | Na₃AlF₆ | 1 | Na₂SiF₆ | 3 | Rb₃AlF₆ | 2 | Na_{1.5}RbAl_{0.5}Si_{0.5}F₆ | 1.1E-06 | --- | Cubic | --- | --- | --- | --- | --- |

### Experiment 1

Commercial LiF powder and commercial AlF₃ powder were prepared. These raw materials were weighed and mixed so that the molar ratio of LiF and AlF₃ became 3:1. A resultant mixture was subjected to heat treatment at 900°C in an Ar (argon) atmosphere and thereafter pulverized in a mortar into Li₃AlF₆ powder. The Li₃AlF₆ powder was subjected to a mechanical milling process using a planetary ball mill to obtain solid electrolyte powder that contained only the Li₃AlF₆ powder.

### Experiment 2

In addition to the Li₃AlF₆ powder according to Experiment 1, commercial Li₂GeF₆ powder was prepared. Li₃AlF₆ and Li₂GeF₆ were weighed and mixed in the molar ratio of 9:1. A resultant mixture was subjected to a mechanical milling process using a planetary ball mill to obtain Li₃AlF₆-Li₂GeF₆ powder as solid electrolyte powder. As described previously, in the case where M1₃M2X₆ and M1₂M3X₆ were mixed in the ratio of the amounts of substances of (1-x):x, where 0 < x < 1, the composition formula was expressed as M1₃₋ₓM2₁₋ₓM3ₓX₆. In the present experiment in which M1, M2, M3, and X were Li, Al, Ge, and F, respectively, and x was 0.1, the solid electrolyte powder was expressed by a composition formula of Li_{2.9}Al_{0.9}Ge_{0.1}F₆.

### Experiment 3

Solid electrolyte powder expressed by a composition formula of Li_{2.8}Al_{0.8}Ge_{0.2}F₆ was obtained through the same processing as in Experiment 2, except that Li₃AlF₆ and Li₂GeF₆ were weighed in the molar ratio of 8:2.

### Experiment 4

Solid electrolyte powder expressed by a composition formula of Li_{2.7}Al_{0.7}Ge_{0.3}F₆ was obtained through the same processing as in Experiment 2, except that Li₃AlF₆ and Li₂GeF₆ were weighed in the molar ratio of 7:3.

### Experiment 5

Solid electrolyte powder expressed by a composition formula of Li_{2.5}Al_{0.5}Ge_{0.5}F₆ was obtained through the same processing as in Experiment 2, except that Li₃AlF₆ and Li₂GeF₆ were weighed in the molar ratio of 5:5.

### Experiment 6

In addition to the Li₃AlF₆ powder according to Experiment 1, commercial Li₂SiF₆ powder was prepared. Li₃AlF₆ and Li₂SiF₆ were weighed and mixed in the molar ratio of 9:1. A resultant mixture was subjected to a mechanical milling process using a planetary ball mill to obtain solid electrolyte powder expressed by a composition formula of Li_{2.9}Al_{0.9}Si_{0.1}F₆.

### Experiment 7

Solid electrolyte powder expressed by a composition formula of Li_{2.8}Al_{0.8}Si_{0.2}F₆ was obtained through the same processing as in Experiment 6, except that Li₃AlF₆ and Li₂SiF₆ were weighed in the molar ratio of 8:2.

### Experiment 8

Solid electrolyte powder expressed by a composition formula of Li_{2.7}Al_{0.7}Si_{0.3}F₆ was obtained through the same processing as in Experiment 6, except that Li₃AlF₆ and Li₂SiF₆ were weighed in the molar ratio of 7:3.

### Experiment 9

Commercial LiF powder and commercial TiF₄ (titanium fluoride) powder were prepared. These raw materials were weighed and mixed so that the molar ratio of LiF and TiF₄ became 2:1. A resultant mixture was subjected to a mechanical milling process using a planetary ball mill to obtain Li₂TiF₆ powder. The Li₃AlF₆ powder according to Experiment 1 and the above Li₂TiF₆ powder were weighed and mixed so that the molar ratio of Li₃AlF₆ and Li₂TiF₆ became 8:2. A resultant mixture was subjected to a mechanical milling process using a planetary ball mill to obtain solid electrolyte powder expressed by a composition formula of Li_{2.8}Al_{0.8}Ti_{0.2}F₆.

### Experiment 10

Commercial RbF powder and commercial AlF₃ powder were prepared. These raw materials were weighed and mixed so that the molar ratio of RbF and AlF₃ became 3:1. A resultant mixture was subjected to a mechanical milling process using a planetary ball mill to obtain Rb₃AlF₆ powder. In addition to the Rb₃AlF₆ powder, commercial Na₃AlF₆ powder and Na₂SiF₆ powder were prepared. These raw materials were weighed and mixed so that the molar ratio of Na₃AlF₆, Na₂SiF₆, and Rb₃AlF₆ became 1:3:2. A resultant mixture was subjected to a mechanical milling process using a planetary ball mill to obtain solid electrolyte powder expressed by a composition formula of Na_{1.5}RbAl_{0.5}Si_{0.5}F₆.

### Measurement 1 of Ion conductivity

The solid electrolyte powder was introduced into a mold configured by a sleeve made of resin and upper and lower punches made of SUS (stainless steel), and was subjected to uniaxial press forming by the application of pressure of 400 MPa. The upper and lower punches were connected to conductors, and impedance measurement was conducted at ambient temperature to calculate ion conductivity. This ion conductivity is shown in the "Conductivity 1" column in Table 1.

### Measurement 2 of Ion Conductivity

The solid electrolyte powder was introduced into a mold configured by upper and lower punches made of SUS, and was subjected to uniaxial press forming by the application of pressure of 150 MPa. Then, a pellet with a diameter of 10 mm and a thickness of approximately 1 mm was taken out. This pellet was subjected to high-temperature/high-pressure processing with 900 MPa at 150°C by WIP (warm isotactic pressing), the processing being higher in pressure and temperature than in "Measurement 1 of Ion Conductivity". After current collecting layers were formed by Au (gold) sputtering on both front and rear sides of the pellet, impedance measurement was conducted to calculate ion conductivity. This ion conductivity is shown in the "Conductivity 2" column in Table 1. It is thought that the application of the WIP processing increased the density of the pellet, i.e., improved densification, resulting in an improvement in ion conductivity.

In all Experiments 2 to 5 where Li₂GeF₆ was mixed with Li₃AlF₆ and all Experiments 6 to 8 where Li₂SiF₆ was mixed with Li₃AlF₆, the ion conductivity at ambient temperature ("Conductivity 1" in Table 1; the same applies to the following in this paragraph) was higher than or equal to 1.0 × 10⁻⁶ S/cm and higher enough than the ion conductivity (5.0 × 10⁻⁸ S/cm) in Experiment 1 where Li₂GeF₆ and Li₂SiF₆ were not mixed together. In Experiment 9 where Li₂TiF₆ was mixed with Li₃AlF₆, the ion conductivity remained at 7.1 × 10⁻⁷ S/cm. Thus, it can be said that the mixing of Li₂GeF₆ or Li₂SiF₆ significantly improved ion conductivity. Considering the results of Experiments 2 and 5 where the ratios of the amount of substance of Li₂GeF₆ were respectively 10% and 50%, it is thought that the ion conductivity will improve sufficiently if the ratio of Li₂GeF₆ is higher than or equal to 3% and lower than or equal to 80%, where 0.03 ≤ x ≤ 0.80. The ratio of Li₂GeF₆ is more preferably higher than or equal to 5% and lower than or equal to 65%, where 0.05 ≤ x ≤ 0.65. This enables more reliably realizing sufficiently high ion conductivity. In Experiment 10 where Na₂SiF₆ and Rb₃AlF₆ were mixed with Na₃AlF₆, the ion conductivity at ambient temperature was 1.1 × 10⁻⁶ S/cm, i.e., high ion conductivity was achieved.

### Preparation of All-Solid-State Battery

The solid electrolyte powder according to Experiments 3 and 7, Li(Ni,Co,Mn)O₂ serving as positive active material powder, graphite serving as negative active material powder, and carbon serving as conductive agent powder were prepared. The solid electrolyte powder, the positive active material powder, and the conductive agent powder were weighed and mixed in the volume ratio of 50:50:2 to obtain blended powder of a positive electrode. The solid electrolyte powder, the negative active material powder, and the conductive agent powder were weighed and mixed in the volume ratio of 50:50:2 to obtain blended powder of a negative electrode. The solid electrolyte powder was introduced into a mold configured by a sleeve made of PEEK resin and upper and lower punches made of SUS, and was subjected to uniaxial press forming by the application of pressure of 150 MPa. The blended powder of the positive electrode was introduced on the pressed solid electrolyte powder and integrated together by the application of pressure of 150 MPa. The blended powder of the negative electrode was introduced on the pressed solid electrolyte powder on the side opposite to the positive electrode and integrated together by the application of pressure of 150 MPa. This produced a battery configured by a positive electrode layer, a solid electrolyte layer, and a negative electrode layer.

### Charge/Discharge Test

The upper and lower punches were connected to conductors, and the above-described battery was placed stationary in a constant-temperature bath kept at 120°C in order to conduct a cc-cv (constant current-constant voltage) charge/discharge test. In the charge/discharge test, the cc current density was set to 300 µA/cm², the cv current density was set to 30 µA/cm², and the cutoff voltage was set in the range of 4.25V to 1.25V. A battery using the solid electrolyte powder according to Experiment 3 had a discharge capacity of 99 mAh/g per positive electrode weight. A battery using the solid electrolyte powder according to Experiment 7 had a discharge capacity of 113 mAh/g per positive electrode weight.

### Powder X-ray Diffraction Measurement

The solid electrolyte powder was analyzed with an X-ray diffractometer (D8-Advance manufactured by Bruker Corporation) using CuKα rays as a radiation source, in order to obtain an X-ray diffraction (XRD) pattern. Measurement conditions were as follows: 20 = 10° to 70°, 0.02°/STEP, and 0.5 sec/STEP. The "XRD Peak Positions" column in Table 1 shows four peak positions (2θ) where the intensity is locally maximized in the X-ray diffraction pattern of the solid electrolyte powder according to each experiment. The "I1/(I1 + I2)" column shows the value of I1/(I1 + I2) in each X-ray diffraction pattern, where I1 is the intensity (height) of a highest peak in the range of the diffraction angle 20 from 40° to 44°, and I2 is the intensity of a highest peak in the range of the diffraction angle 2θ from 19° to 23°. Note that the intensity of each peak uses the height excluding the bottom line of the X-ray diffraction pattern, i.e., background noise components. The bottom line of the X-ray diffraction pattern is obtained by, for example, the Sonneveld-Visser method or spline interpolation.

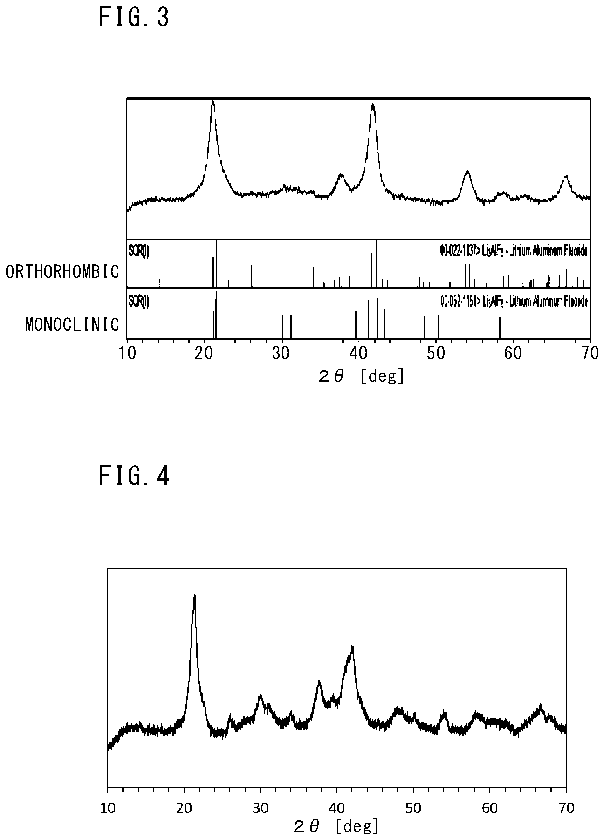

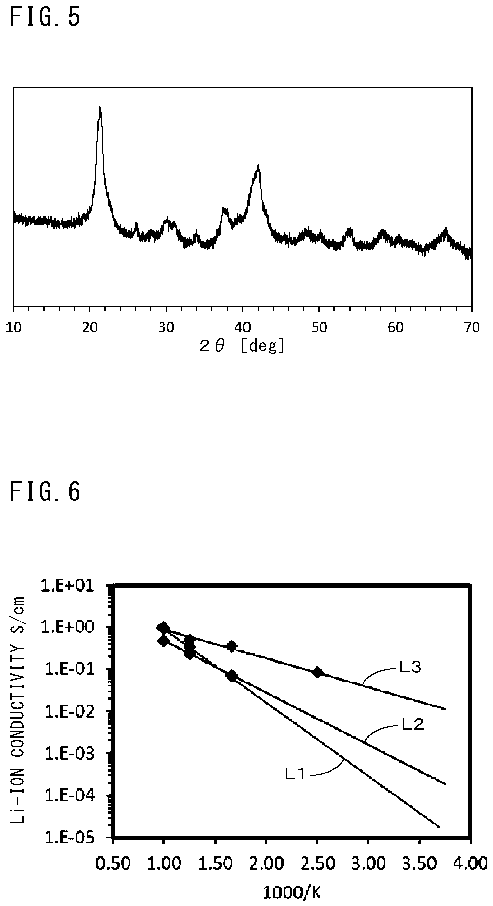

Fig. 3 is a diagram showing an X-ray diffraction pattern of the solid electrolyte powder according to Experiment 7, Fig. 4 is a diagram showing an X-ray diffraction pattern of the solid electrolyte powder according to Experiment 1, and Fig. 5 is an X-ray diffraction pattern of the solid electrolyte powder according to Experiment 9. In Fig. 3, the uppermost section shows the X-ray diffraction pattern according to Experiment 7, the second section shows peaks indicated by Card number ICDD22-1137 (orthorhombic crystal of Li₃AlF₆) in the powder diffraction database of the ICDD (International Centre for Diffraction Data), and the lowermost section shows peaks indicated by Card number ICDD52-1151 (monoclinic crystal of Li₃AlF₆). The orthorhombic crystal of Li₃AlF₆ is a metastable phase, and the monoclinic crystal of Li₃AlF₆ is a most stable phase.

As shown in the second section in Fig. 3, diffraction data on the orthorhombic crystal of Li₃AlF₆ indicated by ICDD22-1137 shows peaks where the intensity is locally maximized, at diffraction angles 20 of around 21°, 42°, 54°, and 66°. Here, the diffraction angle of around 21° means the range of 19° to 23°, and the diffraction angle of around 42° means the range of 40° to 44°. The diffraction angle of around 54° means the range of 52° to 56°, and the diffraction angle of around 66° means the range of 64° to 68°. Moreover, I1/(I1 + I2) becomes a value close to 0.50 because the intensity I1 of the highest peak at the diffraction angle of around 42° and the intensity I2 of the highest peak at the diffraction angle of around 21° are almost the same. In contrast, as shown in the lowermost section in Fig. 3, diffraction data on the monoclinic crystal of Li₃AlF₆ indicated by ICDD52-1151 shows no peaks at the diffraction angles of around 54° and 66°. Moreover, I1/(I1 + I2) becomes a value significantly smaller than 0.50 because the intensity I1 of the highest peak at the diffraction angle of around 42° is lower than the intensity I2 of the highest peak at the diffraction angle of around 21°. The diffraction data on the monoclinic crystal shows a characteristic peak at the diffraction angle of around 58°, and in Experiment 1 in which a peak where the intensity was locally maximized existed at the diffraction angle of around 58°, I1/(I1 + I2) became 0.25 as will be described later. Therefore, in the case where I1/(I1 + I2) is greater than 0.30 in the X-ray diffraction pattern of the solid electrolyte powder, it can be said that the solid electrolyte powder is highly likely to have an orthorhombic crystal structure.

As shown in the uppermost section in Fig. 3, the X-ray diffraction pattern of the solid electrolyte powder according to Experiment 7 which is based on Li₃AlF₆ had distinct peaks at the diffraction angles 20 of around 21°, 42°, 54°, and 66°, and I1/(I1 + I2) was 0.50 as shown in Table 1. In the X-ray diffraction patterns of the solid electrolyte powder according to Experiments 2 to 6 and 8, as shown in Table 1, peaks were also observed at the diffraction angles of around 21°, 42°, 54°, and 66°, and I1/(I1 + I2) was greater than 0.30. Accordingly, the crystal structures (crystal phases) of the solid electrolyte powder according to Experiments 2 to 8 were identified as orthorhombic.

On the other hand, the X-ray diffraction pattern of the solid electrolyte powder according to Experiment 1 had a peak where the intensity was locally maximized, at the diffraction angle of around 58° as shown in Table 1. Besides, as shown in Fig. 4, the intensity I1 of the highest peak at the diffraction angle of around 42° was low, and I1/(I1 + I2) became a value (0.25) significantly smaller than 0.50. Therefore, the crystal structure of the solid electrolyte powder according to Experiment 1 was identified as monoclinic. As shown in Fig. 5, the X-ray diffraction pattern of the solid electrolyte powder according to Experiment 9 seemed to have low peaks at the diffraction angles of around 54° and 66° in addition to the peaks at the diffraction angles of around 21° and 42°, but these peaks were not absolutely clear. Besides, the intensity I1 of the highest peak at the diffraction angle of around 42° was low, and I1/(I1 + I2) became 0.25 as shown in Table 1. Therefore, the crystal structure of the solid electrolyte powder according to Experiment 9 was also identified as monoclinic.

### Consideration of Crystal Structure

As described previously, in Experiments 2 to 8 where the crystal structures were orthorhombic, higher ion conductivity was observed than in Experiments 1 and 9 where the crystal structures were monoclinic. To be more specific, the comparison of Experiments 2 to 5 where Li, Al, Ge, and F were included shows that higher ion conductivity was observed as I1/(I1 + I2) became greater, i.e., as the crystal structure had more distinctive features as an orthorhombic crystal structure. The same also applies to Experiments 6 to 8 where Li, Al, Si, and F were included. The reason why the solid electrolyte having an orthorhombic crystal structure exhibited higher ion conductivity than the solid electrolyte having a monoclinic crystal structure is not clear, but it is anticipated that one contributing factor is that the orthorhombic crystal structure has higher symmetry as a crystal structure than the monoclinic crystal structure, thereby facilitating migration of Li ions in crystal lattices. Examples of other crystal structures that have higher symmetry than the monoclinic crystal structure include a cubic crystal structure and a tetragonal crystal structure in which all interaxial angles α, β, and γ of unit cells are 90° as in the orthorhombic crystal structure. These crystal structures are also thought to realize improved ion conductivity in the same manner as described above. In actuality, in Experiment 10 where the solid electrolyte contained Na instead of Li and further contained Rb in addition to Al, Si, and F, the solid electrolyte had a cubic crystal structure based on Rb₃AlF₆ and exhibited high ion conductivity. Accordingly, it is sufficient for the present solid electrolyte to have a crystal structure in which all interaxial angles α, β, and γ of a unit cell are 90°, and the crystal structure is not limited to an orthorhombic crystal structure.

As described previously, the solid electrolyte having the above-described crystal structure may contain Na or K that serves as a univalent cation like Li, instead of or in addition to Li. Other elements (e.g., Ga, In, or Y) serving as a trivalent cation like Al may also be contained instead of or in addition to Al. The solid electrolyte may further contain other elements (e.g., Sn) that serve as a quadrivalent cation like Ge or Si, instead of or in addition to Ge or Si. The solid electrolyte may yet further contain Cl, Br, or I that serves as a univalent anion like F, instead of or in addition to F.

As described above, it is sufficient for the present solid electrolyte to contain M1, M2, M3, and X, where M1 is an element(s) serving as a univalent cation and includes at least one element selected from the group consisting of Li, Na, and K, M2 is at least one element serving as a trivalent cation, M3 is at least one element serving as a quadrivalent cation, and X is at least one element selected from the group consisting of F, Cl, Br, and I. Then, if all the interaxial angles α, β, and γ of the unit cell in the crystal structure are 90°, it is possible to realize the solid electrolyte with high ion conductivity.

In Experiments 2 to 8 described above, by mixing Li₂GeF₆ or Li₂SiF₆ with Li₃AlF₆, Ge or Si serving as a quadrivalent cation is though to be solid-solved in the crystal structure of Li₃AlF₆, thereby stabilizing the crystal structure (orthorhombic crystal structure in the above description) with high symmetry. The same also applies to the case where Na or K is used instead of Li. For compounds such as Li₃AlF₆ and Na₃AlF₆, a monoclinic crystal structure is thermodynamically most stable, but orthorhombic and cubic crystal structures are also metastable and exist as high-temperature phases. That is, Li₃AlF₆ and Na₃AlF₆ can have an orthorhombic or cubic crystal structure even if not mixed with other compounds. Therefore, Li₃AlF₆ having an orthorhombic or cubic crystal structure may be used alone as the present solid electrolyte without being mixed with Li₂GeF₆ or Li₂SiF₆. The same also applies to Na₃AlF₆ and like compounds. Methods of taking out a metastable state at ambient temperature generally include quenching by rapid cooling, and ultra-high pressure and high-temperature processing (e.g., with 10 GPa at 900°C). Using these methods, a crystal structure with high symmetry may be obtained for compounds such as Li₃AlF₆ and Na₃AlF₆. In this way, if all the interaxial angles α, β, and γ of the unit cell in the crystal structure are 90°, the present solid electrolyte may contain only M1, M2, and X without containing M3. Even if not containing M3, the solid electrolyte with high ion conductivity can be provided.

Here, for Li₃AlF₆ in which Si is solid-solved, i.e., for Li₃AlF₆ where Li deficiency arises due to Si₄₊ being solid-solved in Al³⁺, ion conductivity of various crystal structures were calculated from neural network molecular dynamics simulations. Here, LAMMPS was used as a molecular dynamics simulation solver. As crystal structures, mp-15254 (monoclinic crystal), mp-556020 (orthorhombic crystal), and mp-1111291 (cubic crystal) in the crystal structure database, Materials Projects, were used. From the above-described crystal structures, supercells (468 atoms) were created using NanoLabo software developed by AdvanceSoft corporation. Moreover, a crystal structure in which 25 mol% of the Al-sites were randomly substituted with Si, and Li was also randomly reduced by the same amount as Si for charge compensation was created using NanoLabo. The force field used was the M3GNet force field. After implementation of structural optimization, MD (molecular dynamics) simulations were conducted. The NVT ensemble was used with the time steps of 2 femtoseconds in a simulation time of 400 picoseconds. For each compound, the simulations were conducted with three to four cases of the set temperature from 400 K to 1000 K. Based on the trajectories of the MD simulations, a diffusion coefficient was calculated from the slope of the mean square displacement of Li ions relative to the simulation time, and Li-ion conductivity was calculated based on the Nernst-Einstein equation (σ = z²F²cD/RT, where σ was the conductivity, z was the ion valence, F was the Faraday constant, c was the ion concentration, D was the diffusion constant, and R was the molar gas constant). Then, activation energy was determined from the Li ion conductivity calculated at each temperature, and ion conductivity at 300 K (ambient temperature) was calculated (see Fig 6 described below).

Fig. 6 is a diagram showing Arrhenius plots of ion conductivity. A reference sign L1 is assigned to a change in the ion conductivity of a monoclinic crystal structure, a reference sign L2 is assigned to a change in the ion conductivity of an orthorhombic crystal structure, and a reference sign L3 is assigned to a change in the ion conductivity of a cubic crystal structure. The ion conductivity of each crystal structure at 300 K (the ion conductivity based on the MD simulations) was as follows: 2.4 × 10⁻² S/cm for the cubic crystal structure, 6.5 × 10⁻⁴ S/cm for the orthorhombic crystal structure, and 2.7 × 10⁻⁵ S/cm for the monoclinic crystal structure. As shown in Table 1, the ion conductivity according to Experiment 7, where 20 mol% of the Al-sites were substituted to form an orthorhombic crystal structure, was higher than the ion conductivity according to Experiment 9, where 20 mol% of the Al-sites were substituted to form a monoclinic crystal structure. That is, the results of calculating the ion conductivity by the MD simulations are consistent with the tendencies of the experimental results. Accordingly, it can be said that Li₃AlF₆ exhibits higher ion conductivity at ambient temperature in the order of a monoclinic crystal structure, an orthorhombic crystal structure, and a cubic crystal structure, i.e., as the crystal structure has higher symmetry.

In the case where a solid electrolyte having a cubic crystal structure is obtained, a compound that has cubic crystals as a stable crystal structure, such as Rb₃AlF₆, Cs₃AlF₆, NaK₂AlF₆, or NaPF₆, may be doped with Li or Na (which may also be K) in order to educe Li- or Na-ion conductivity. In Experiment 10, the solid electrolyte with cubic crystals having high Na-ion conductivity was obtained by mixing Na₃AlF₆ and Na₂SiF₆ with Rb₃AlF₆.

A preferable solid electrolyte further contains M3, in addition to M1, M2, and X. This makes it easy to realize a solid electrolyte having a unit cell in which all interaxial angles α, β, and γ are 90°. More preferably, the solid electrolyte is expressed by a composition formula of M1ₐM2_{b}M3_{c}X₆ (the above composition formula (1)), where 2 < a < 3, 0 < b < 1, and 0 < c < 1 are satisfied. This enables more reliably realizing the solid electrolyte with high ion conductivity.

By the way, among solid electrolytes, materials such as sulfide-based ones that react with moisture to generate hydrogen sulfide gas are widely known. On the other hand, oxide-based solid electrolytes that do not generate gas such as hydrogen sulfide are also being widely developed, but such solid electrolytes usually require densification through high-temperature sintering in order to improve ion conductivity. This causes a problem that the solid electrolytes react with the active materials during battery production and accordingly lead to high resistance. In contrast, the present solid electrolyte is a non-flammable and chemically stable material, thereby making it possible to provide an inherently safe ion battery. Besides, the present solid electrolyte can be densified by the pressure of press forming, not sintering. This prevents the present solid electrolyte from reacting with the active materials during battery production.

The method of producing the present solid electrolyte includes the step of obtaining a mixture of M1₃M2X₆ and M1₂M3X₆ or a mixture of M1X, M2X₃, and M1₂M3X₆ (step S11), and the step of subjecting the mixture to a mechanical milling process (step S12). Accordingly, it is possible to easily produce a solid electrolyte with high ion conductivity.

The present solid electrolyte, the all-solid-state battery 1, and the method of producing the solid electrolyte may be modified in various ways.

The present solid electrolyte may be produced by methods other than the production method shown in Fig. 2. The solid electrolyte containing M1, M2, M3, and X does not necessarily have to satisfy the above composition formula (1).

The present solid electrolyte may be mixed with other substances and used as an electrolyte material. In this case, the present solid electrolyte preferably serves as a component with a highest mass ratio, i.e., a principal component, among the components contained in the electrolyte material. The mass ratio of the principal component in the electrolyte material is preferably higher than or equal to 50% by mass, more preferably higher than or equal to 60% by mass, and yet more preferably higher than or equal to 70% by mass.

The present solid electrolyte used in the all-solid-state battery 1 does not necessarily have to be contained in all of the positive electrode 11, the negative electrode 12, and the electrolyte layer 13, and may be contained in at least one of the positive electrode 11, the negative electrode 12, or the electrolyte layer 13. The present solid electrolyte may be used in batteries other than all-solid-state batteries, and may be used for purposes other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all-solid-state battery
- 11: positive electrode
- 12: negative electrode
- 13: electrolyte layer
- S11, S12: step

## Claims

1. A solid electrolyte comprising:
M1, M2, and X,
wherein M1 is an element(s) serving as a univalent cation and includes at least one element selected from a group consisting of Li, Na, and K,
M2 is at least one element serving as a trivalent cation,
X is at least one element selected from a group consisting of F, Cl, Br, and I, and
all interaxial angles α, β, and γ of a unit cell in a crystal structure are 90°.

2. The solid electrolyte according to claim 1, wherein
an X-ray diffraction pattern obtained by X-ray diffraction measurement using a CuKα ray has a peak in each of ranges of a diffraction angle 20 from 19° to 23°, from 40° to 44°, from 52° to 56°, and from 64° to 68°.

3. The solid electrolyte according to claim 1, wherein
in an X-ray diffraction pattern obtained by X-ray diffraction measurement using a CuKα ray, I1/(I1 + I2) is greater than 0.30, where I1 is an intensity of a highest peak in a range of a diffraction angle 20 from 40° to 44°, and I2 is an intensity of a highest peak in a range of the diffraction angle 2θ from 19° to 23°.

4. The solid electrolyte according to claim 1, further comprising:
M3 that is at least one element serving as a quadrivalent cation.

5. The solid electrolyte according to claim 4, being expressed by a composition formula of M1ₐM2_{b}M3_{c}X₆, where 2 < a < 3, 0 < b < 1, and 0 < c < 1 are satisfied.

6. The solid electrolyte according to claim 4, wherein
M3 includes Ge or Si.

7. The solid electrolyte according to claim 1, wherein
X includes F.

8. The solid electrolyte according to claim 1, wherein
M2 includes Al.

9. The solid electrolyte according to claim 1, wherein
M1 includes Rb or Cs.

10. A method of producing the solid electrolyte according to any one of claims 1 to 9,
the method comprising:
a) obtaining a mixture of M1₃M2X₆ and M1₂M3X₆ or a mixture of M1X, M2X₃, and M1₂M3X₆, where M1 is an element(s) serving as a univalent cation and includes at least one element selected from a group consisting of Li, Na, and K, M2 is at least one element serving as a trivalent cation, X is at least one element selected from a group consisting of F, Cl, Br, and I, and M3 is at least one element serving as a quadrivalent cation; and
b) subjecting said mixture to a mechanical milling process.

11. A battery comprising:
a positive electrode;
a negative electrode; and
an electrolyte layer provided between said positive electrode and said negative electrode,
wherein the solid electrolyte according to any one of claims 1 to 9 is contained in at least one of said positive electrode, said negative electrode, or said electrolyte layer.
